(19) **Europäisches Patentamt / European Patent Office / Office européen des brevets**

(11) **EP 2 833 160 B1**

(12) **EUROPEAN PATENT SPECIFICATION**

(45) Date of publication and mention
of the grant of the patent:
**13.09.2017 Bulletin 2017/37**

(21) Application number: **13767884.3**

(22) Date of filing: **07.03.2013**

(51) Int Cl.:
*G01S 17/06* (2006.01)  *G01S 17/89* (2006.01)
*B60R 21/015* (2006.01)  *G01S 17/10* (2006.01)
*G01S 17/02* (2006.01)  *H04N 5/225* (2006.01)
*H04N 5/33* (2006.01)  *G01J 5/08* (2006.01)
*G01S 17/36* (2006.01)  *G01S 7/48* (2006.01)
*G01J 5/02* (2006.01)  *G06K 9/00* (2006.01)
*G08B 13/196* (2006.01)  *G08B 13/19* (2006.01)
*G08B 21/06* (2006.01)

(86) International application number:
**PCT/JP2013/056250**

(87) International publication number:
**WO 2013/146156 (03.10.2013 Gazette 2013/40)**

(54) **INFORMATION ACQUISITION DEVICE FOR OBJECTS TO BE MEASURED**

VORRICHTUNG ZUR ERFASSUNG VON INFORMATIONEN VON ZU MESSENDEN OBJEKTEN

DISPOSITIF D'ACQUISITION D'INFORMATIONS DES OBJETS À MESURER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2012 JP 2012077501**

(43) Date of publication of application:
**04.02.2015 Bulletin 2015/06**

(73) Proprietor: **Stanley Electric Co., Ltd.
Meguro-ku
Tokyo 153-8636 (JP)**

(72) Inventor: **KAWATA, Tadashi
Tokyo 153-8636 (JP)**

(74) Representative: **Wimmer, Hubert
WAGNER & GEYER
Gewürzmühlstrasse 5
80538 München (DE)**

(56) References cited:
**WO-A1-2005/026774   JP-A- H07 110 440
JP-A- H11 108 761    JP-A- H11 259 206
JP-A- 2008 089 346   JP-A- 2008 165 578
JP-A- 2009 023 400   US-A1- 2006 049 930
US-A1- 2008 036 576  US-A1- 2008 079 833
US-A1- 2009 092 284  US-A1- 2010 117 839**

- **ELLIOT N SABA ET AL: "Dante vision: In-air and
touch gesture sensing for natural surface
interaction with combined depth and thermal
cameras", EMERGING SIGNAL PROCESSING
APPLICATIONS (ESPA), 2012 IEEE
INTERNATIONAL CONFERENCE ON, IEEE, 12
January 2012 (2012-01-12), pages 167-170,
XP032116223, DOI: 10.1109/ESPA.2012.6152472
ISBN: 978-1-4673-0899-1**

EP 2 833 160 B1

## Description

Technical Field

The present invention relates to an information acquisition device for an object to be measured that acquires various types of information on the object to be measured based on a distance to the object to be measured.

Background Art

There has been known a distance measurement device that emits modulated light to an object to be measured, detects by a camera the reflected light of the modulated light that is reflected off the object to be measured and returns, and calculates the required time for the modulated light to make a round trip to the object to be measured based on an output of the camera, thereby measuring the distance to the object to be measured based on the required time (e.g. JP 2008-89346 A).

Meanwhile, JP 2010-184600 A discloses a gesture switch device by which a driver issues various instructions to a car navigation system by moving his/her fingers to make predetermined gestures. According to the gesture switch device, stereo cameras are provided on a dashboard (one each on the right and the left), and three-dimensional image information on the fingers of the driver is acquired from the stereo cameras.

WO 2005/026774 A1 discloses a surroundings monitoring system having a night vision unit and a distance measuring unit, whereby a shared emitter is provided for emitting electromagnetic waves into the target area to be monitored. The electromagnetic waves are, for measuring distance, modulated in a train of high-frequency individual pulses, whereby the emission duration of the receivers and the illumination time of the receiver are selected for the night vision unit such that a number of pulses of the electromagnetic waves modulated in a pulsed manner are detected and, for the night vision image, the sum of these pulses is evaluated. Pauses between the pulse trains are selected so that the interfering light can be blanked out and can be subsequently eliminated from the night vision image.

US 2006/049930 A1 discloses a method for the monitoring of an environment, by procuring, adjourning and storing in a memory, files representing the background space. Programs for processing data obtained from the observation of objects are defined and stored in a memory, for identifying the objects and for determining whether they are dangerous. Parameters, according to which the observation of the controlled space is effected, are determined and stored. Photographic observation of the controlled space or sections thereof, is performed according to the aforesaid observation parameters. The digital data representing these photographs are processed to determine whether possible dangerous objects have been detected, and if so, these objects are classified according to the stored danger parameters.

US 2010/117839 A1 discloses a system and method for detecting a fire which includes a fire detection device and a control center terminal. The fire detection device includes an LRF for calculating a distance to a location of breakout of a fire using a laser. An infrared camera captures an infrared image and transmits the infrared image to a control unit. A CCD camera captures a CCD image and transmits the CCD image to the control unit. The control unit analyzes the infrared image, determines whether a fire has broken out, performs processing such that the CCD camera captures an area on fire, determines the location of breakout of the fire, performs processing such that the captured image is output to the control center terminal, and controls a function of a warning unit. The warning unit outputs a warning sound or a warning message.

Summary of Invention

Technical Problem

The gesture switch device in JP 2010-184600 A is capable of grasping a gesture in a place where a predetermined level of brightness is secured, but poses a problem with grasping a gesture when a vehicle interior is dark, such as at nighttime.

The distance measurement device in JP 2008-89346 A is capable of smoothly measuring the distance to an object to be measured even in the dark, but has difficulties in acquiring information on the object to be measured other than the distance.

An object of the present invention is to provide an information acquisition device for an object to be measured that is capable of smoothly acquiring various types of information on an object to be measured even in the dark.

Solution to Problem

An information acquisition device for an object to be measured in accordance with the present invention is provided as set forth in claim 1. Preferred embodiments of the present invention may be gathered from the dependent claims.

According to the present invention, the measurement of the distance to an object to be measured by using modulated light can be accomplished and the temperature of each image pickup section based on the incident amount of a medium emitted for temperature observation from the object to be measured can be calculated or detected independently of ambient brightness. This makes it possible to securely acquire, even in the dark, various types of information on the object to be measured based on the distance to the object to be measured and the detected temperature of each image pickup section.

Preferably, in the information acquisition device for an object to be measured, the temperature detection device is comprised of an imaging type temperature sensor which stores the intensity of the medium emitted for temperature observation from each portion of the image pickup range as the data of each pixel and which allows pixel data belonging to each image pickup section to be read or comprised of a plurality of incident amount detection type temperature sensors, each of which detects the incident amount of a medium emitted for temperature observation from a corresponding image pickup section.

With this arrangement, the temperature of each image pickup section can be successfully detected based on the imaging type temperature sensor or the plurality of the incident amount detection type temperature sensors.

Preferably, in the information acquisition device for an object to be measured, the information acquisition unit extracts an image portion corresponding to an image pickup section in which the object to be measured exists from the pickup image on the basis of the detection of the temperature detection device and carries out pattern matching on the image portion, thereby acquiring information on the object to be measured.

According to this arrangement, the pattern matching processing is carried out by focusing on an image portion corresponding to the image pickup section wherein the object to be measured exists on the basis of the detection by the temperature detection device, thus permitting reduced load and shorter processing time of the pattern matching processing.

Brief Description of Drawings

FIG. 1 is a deployment diagram of an interior information acquisition device in an automobile.
FIG. 2 is a perspective view of the interior information acquisition device observed from the front surface thereof.
FIG. 3 is a deployment diagram of the interior information acquisition device and infrared sensors in the automobile in the case where a plurality of infrared sensors is used in place of a single infrared camera.
FIG. 4 is a diagram illustrating the relationship between the incident range of infrared rays in which each infrared sensor detects the incident amount and an image pickup range.
FIG. 5 is a block diagram of the interior information acquisition device.
FIG. 6 is an explanatory diagram of a distance measurement method using modulated light.
FIG. 7A and FIG. 7B are explanatory diagrams illustrating the relationship among the vertical view angle of an optical camera, a distance from the optical camera, and a vertical view angle width.
FIG. 8A and FIG. 8B are explanatory diagrams of a case in which the size of an object to be measured cannot be determined from a distance alone.
FIG. 9A and FIG. 9B are diagrams illustrating image pickup sections as temperature detection sections set for image pickup ranges.
FIG. 10A and FIG. 10B are diagrams illustrating that the size of a person can be determined based on the temperature of each image pickup section.
FIG. 11A, FIG. 11B, and FIG. 11C are diagrams illustrating various finger gestures by a driver.
FIG. 12 is a flowchart of the control carried out in the automobile provided with the interior information acquisition device.

Description of Embodiments

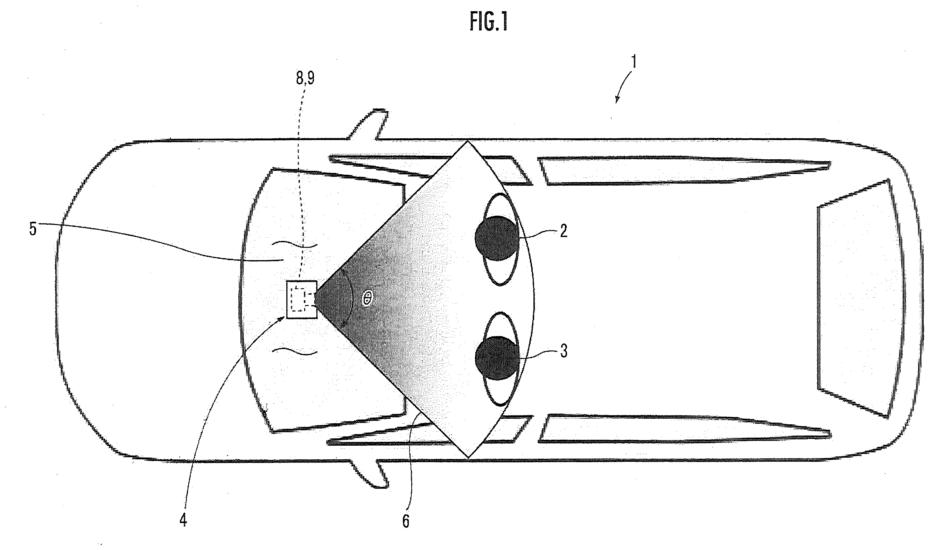

In an automobile 1 in FIG. 1, a driver 2 and a front seat passenger 3 are sitting on a driver seat and a front passenger seat, respectively, in a vehicle interior. An interior information acquisition device 4 is installed at a substantially central position in the lateral direction of a dashboard 5, facing the rear of the vehicle interior.

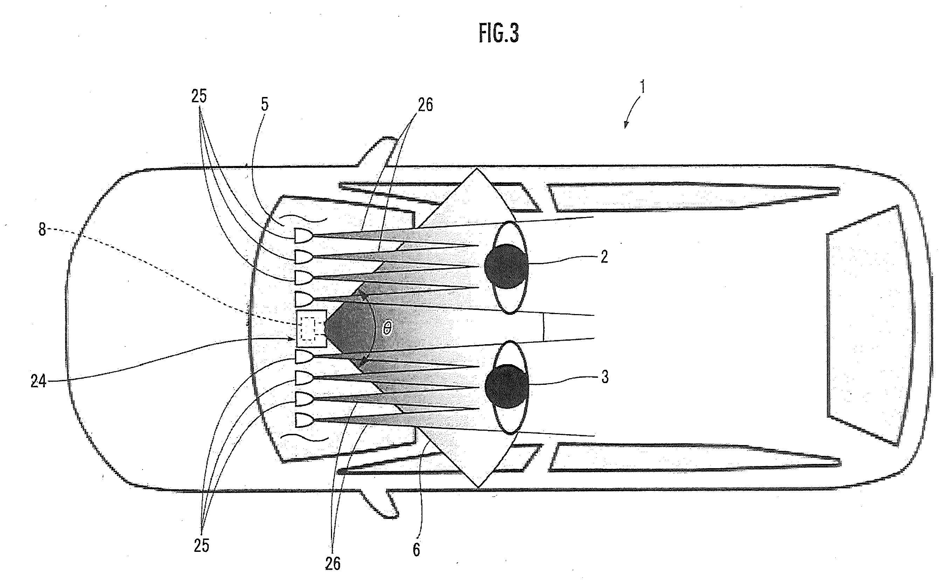

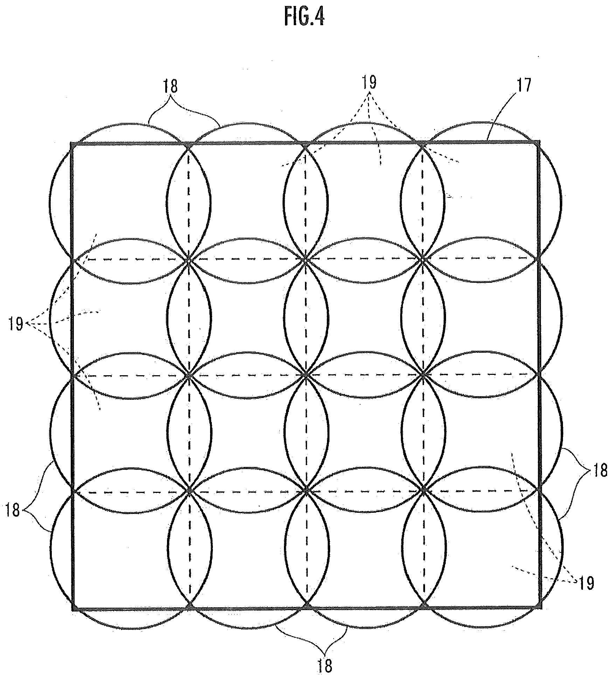

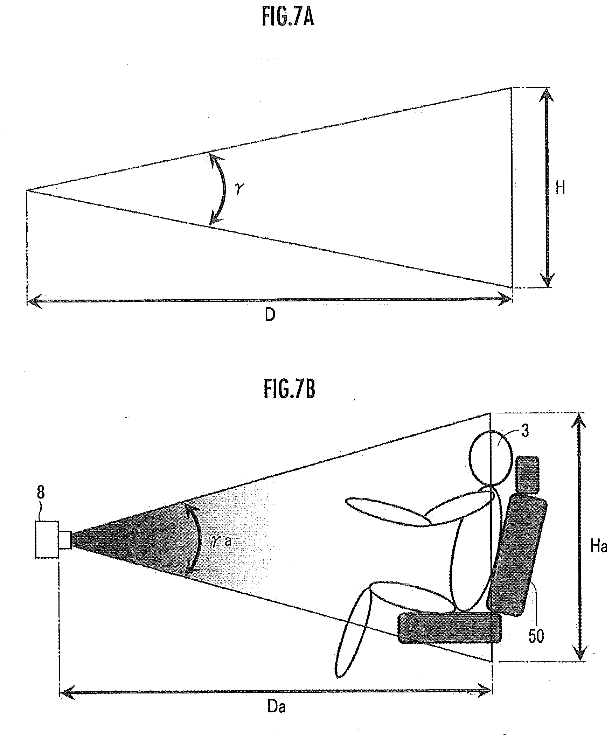

The interior information acquisition device 4 includes an optical camera 8 and an infrared camera 9. The optical camera 8 and the infrared camera 9 capture an image pickup range 6 specified by a horizontal view angle θ (FIG. 3) and a vertical view angle γ (FIG. 7A) and generate pickup images from light and infrared rays, respectively. The image pickup range 6 in FIG. 1 and FIG. 3, which will be described hereinafter, is the image pickup range 6 observed from a direction at right angles relative to the direction of the optical axis of the optical camera 8. An image pickup range 17, which will be described with reference to FIG. 4, is an image pickup range observed in the direction of the optical axis. The image pickup ranges 6 and 17 are the image pickup ranges of the optical camera 8 and the infrared camera 9 covering the same subject observed from different directions.

The driver 2 and the front seat passenger 3 are positioned inside the image pickup range 6. The optical camera 8 and the infrared camera 9 respectively save the incident amounts of the light and the infrared rays from each portion of the image pickup range 6 as data in each corresponding pixel. The optical camera 8 and the infrared camera 9 are capable of reading the stored pixel data for each pixel.

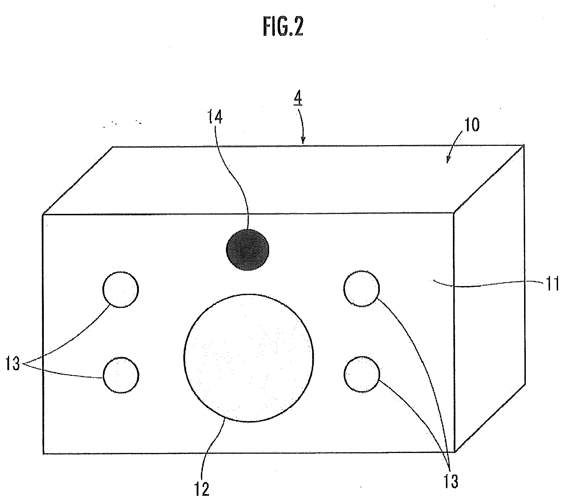

In FIG. 2, the interior information acquisition device 4 includes elements, which will be discussed hereinafter, in a case 10. Exposed on a front surface 11 of the case 10 are a convex lens 12 of the optical camera 8, four LEDs (Light Emitting Diodes) 13, and an incident section 14 of the infrared camera 9.

The convex lens 12 and the incident section 14 are disposed on the front surface 11 at a lower side and an upper side, respectively, relative to a central line passing through the center of the lateral width of the front surface 11. The LEDs 13 are disposed, two each on the right and left sides of the convex lens 12. The LEDs 13 are deployed with the optical axes thereof directed slightly outward such that the optical axes thereof move away from each other laterally and vertically as the distance from the case 10 increases and that the modulated light therefrom evenly spreads in the lateral direction as a whole and over the entire lateral width of the image pickup range 6 and also in the vertical direction over the entire vertical width of the image pickup range 6.

In FIG. 3, a plurality of infrared sensors 25 in place of the single infrared camera 9 is deployed in a row along the direction of the vehicle width, facing toward the rear of the vehicle. An interior information acquisition device 24 is deployed at the same position as the interior information acquisition device 4 in FIG. 1, and the infrared camera 9 (FIG. 1) has been removed. The infrared sensors 25 detect the incident amounts of the infrared rays coming from corresponding incident fields 26 as the temperatures of the incident fields 26.

As illustrated in FIG. 3, in the case where the plurality of the infrared sensors 25 is disposed in a row in the direction of the vehicle width, the infrared rays of the driver seat and the infrared rays of the front passenger seat can be separately measured. In the case where the infrared rays of both the driver seat and the front passenger seat are measured by the single infrared camera 9, the infrared rays of the driver seat and the infrared rays of the front passenger seat can be also separately measured by extracting the pixel data corresponding to the image pickup ranges of the driver seat and the front passenger seat, respectively, from the infrared camera 9.

FIG. 4 is a diagram illustrating the sections of the incident range of infrared rays, in which each of the infrared sensors 25 detects the incident amount. The image pickup range 17 is an image pickup range observed in the direction of the optical axis of the optical camera 8, the image pickup range being positioned apart from the optical camera 8 by a predetermined distance. The size of the image pickup range 17 increases as the distance from the optical camera 8 increases in the direction of the optical axis of the optical camera 8. However, the sizes of infrared ray detection ranges 18 and image pickup sections 19, which will be discussed hereinafter, also increase accordingly, so that the size ratio among the image pickup range 17, the infrared ray detection ranges 18 and the image pickup sections 19 is maintained to be the same independently of the position of the image pickup range 17 in the direction of the optical axis of the optical camera 8.

In this example, the image pickup range 17 is square and divided into 16 (4x4) square image pickup sections 19. The quantity of the infrared ray detection ranges 18 is set to be the same quantity of the infrared sensors 25. The infrared sensors 25 are mounted on the dashboard 5 such that the optical axes thereof penetrate the centers of the image pickup sections 19 corresponding thereto.

Each of the infrared ray detection ranges 18 is the range occupied by each of the incident fields 26 (FIG. 3) on the plane of the image pickup range 17 and is a circumscribed circle of each of the image pickup sections 19. As a result, the image pickup range 17 is completely covered by the infrared ray detection ranges 18 with no gap. Each of the infrared sensors 25 detects the amount of infrared rays from each of the infrared ray detection ranges 18 as the temperature of each of the image pickup sections 19. The infrared ray detection ranges 18 that are adjacent to each other horizontally and vertically overlap partly in the peripheral portions thereof on the plane of the image pickup range 17.

Meanwhile, the infrared camera 9 in FIG. 1 is capable of generating an infrared pickup image of the image pickup range 17 and reading the pixel data of an imaging section corresponding to each of the image pickup sections 19 from the pickup image. Then, based on the pixel data on each of the image pickup sections 19 that has been read, the infrared camera 9 calculates the incident amount of the infrared ray for each of the image pickup sections 19 and detects the calculated incident amount as the temperature of each of the image pickup sections 19. Hence, the image pickup sections 19 which are vertically and horizontally adjacent to each other and in each of which the infrared camera 9 detects the temperature are in contact with each other on border lines without overlapping on the plane of the image pickup range 17.

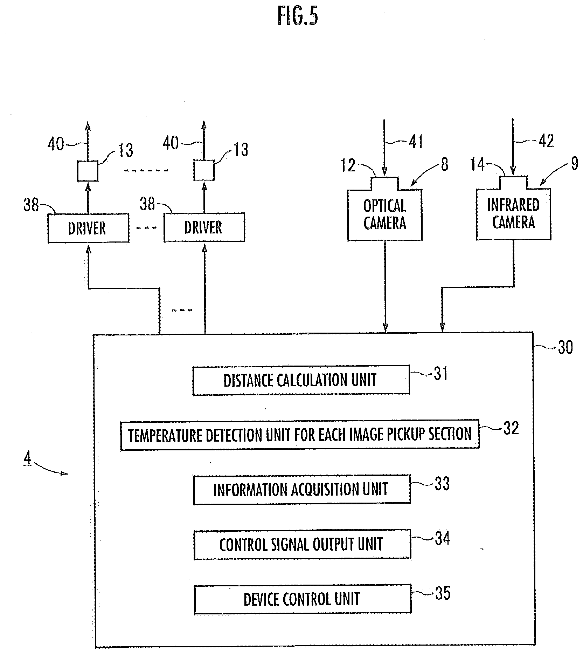

FIG. 5 is a block diagram of the interior information acquisition device 4. A controller 30 has a distance calculation unit 31, a temperature detection unit for each image pickup section 32, an information acquisition unit 33, a control signal output unit 34, and a device control unit 35. The distance calculation unit 31 uses a publicly known time of flight measurement method (TOF: Time-Of-Flight) to calculate the distance to an object to be measured included in the image pickup range 6 of the optical camera 8.

The control signal output unit 34 controls the drive current to drivers 38 that drive the LEDs 13 to turn on/off the LEDs, thereby generating modulated light 40 emitted from the LEDs 13. The modulated light 40 emitted from each of the LEDs 13 spreads toward a direction at right angles to the optical axis of each of the LEDs 13 as the modulated light 40 advances in the direction of the optical axis. The spreading ranges of the modulated light 40 may overlap. The control signal output unit 34 selects one of the LEDs 13 that emits the modulated light 40 from among the plurality of the LEDs 13 and prevents the optical camera 8 from receiving reflected light derived from a plurality of the modulated lights 40, thereby ensuring the accuracy of the measurement of the distance to the object to be measured.

Reflected light 41 enters the optical camera 8 through the convex lens 12. The convex lens 12 functions to narrow the reflected light 41. An infrared ray 42 enters the infrared camera 9 through the incident section 14. If the interior information acquisition device 24 is used in place of the interior information acquisition device 4, then the plurality of the infrared sensors 25 replaces the infrared camera 9 in the block diagram of FIG. 5.

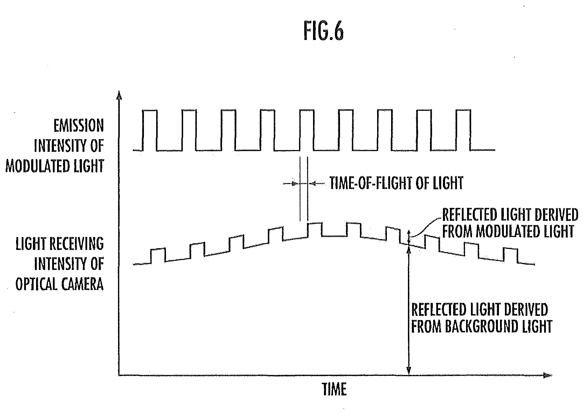

Referring to FIG. 6, the TOF will be schematically described. FIG. 6 is a timing chart illustrating the modulated light 40 emitted from the LEDs 13 and the intensity of light received by the optical camera 8 (corresponding to the amount of received light at each time point).

The modulated light 40 formed of a train of pulses is generated by alternately turning the LEDs 13 on (switched on) and off (switched off). The frequency of the modulated light 40 ranges, for example, from 5 MHz to 10 MHz.

The intensity of the received light of the reflected light 41 incident on the optical camera 8 will be the combination of the intensity of the incident reflected light of the modulated light 40 that is reflected off the object to be measured in the image pickup range 6 (FIG. 1 and FIG. 3) and the incident intensity of the reflected light derived from background light. The reflected light derived from the background light becomes weaker as the vehicle interior becomes darker, while the reflected light derived from the modulated light 40 secures a predetermined intensity even when the vehicle interior is dark.

During the incident period of light derived from the modulated light 40, the intensity of the received light of the optical camera 8 spikes up in comparison with the intensity of the received light before and after the incident period. According to the TOF, the time of flight of light is calculated from the difference between the light phase at the time when the modulated light 40 rises at the LED 13 (= at a start of the emission of the modulated light 40 from the LED 13) and the light phase at the time when the reflected light derived from the modulated light 40 that has been reflected off the object to be measured in the forward begins to enter the optical camera 8, and the distance to the object to be measured is calculated based on the time of flight of the light.

Referring back to FIG. 5, the temperature detection unit for each image pickup section 32 detects the temperature of each of the image pickup sections 19 of the image pickup range 17.

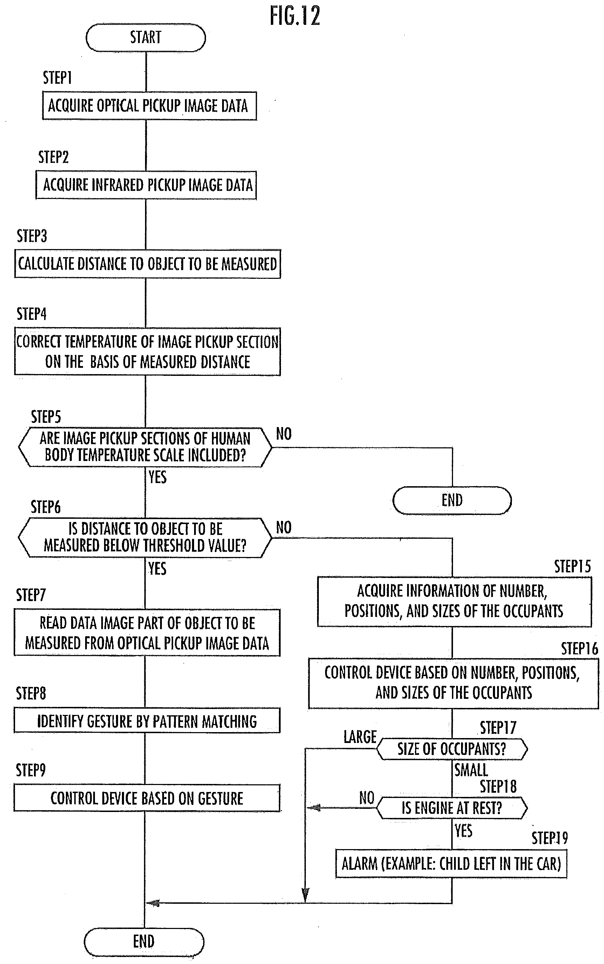

The information acquisition unit 33 acquires various types of information related to the object to be measured based on the outputs of the distance calculation unit 31 and the temperature detection unit for each image pickup section 32. Specific examples of the various types of information include gestures and the number of occupants acquired in STEP8 and STEP15, respectively, in FIG. 12, which will be discussed hereinafter.

FIG. 7A is an explanatory diagram illustrating the relationship among a vertical view angle $\gamma$ of the optical camera 8, a distance D from the optical camera 8, and a vertical view angle width H. Relational expressions given below hold for $\gamma$, D and H. The symbol "tan" means a tangent.

$$\tan(\gamma/2) = H/(2 \cdot D) \quad \ldots (1)$$

$$2D \cdot \tan(\gamma/2) = H \quad \ldots (2)$$

If the number of pixels in the vertical direction of the optical camera 8 is denoted by n, then a height per pixel H/n is expressed by (3) given below.

$$H/n = (2D/n) \cdot \tan(\gamma/2) \quad \ldots (3)$$

From expression (3), it is seen that the height of the object to be measured is determined from the distance to the object to be measured and the number of vertically successive pixels picking up the image of the object to be measured among the pixels of the optical camera 8.

FIG. 7B is an explanatory diagram illustrating the calculation of a height Ha of an actual space of a front seat passenger 3. A distance Da to the front seat passenger 3 is calculated according to the TOF, the number of vertically successive pixels of the object to be measured is detected based on the pixel data of the optical camera 8, and $\gamma$a is determined from the detected number of the successive pixels. As a result, the Ha is calculated according to expression (3).

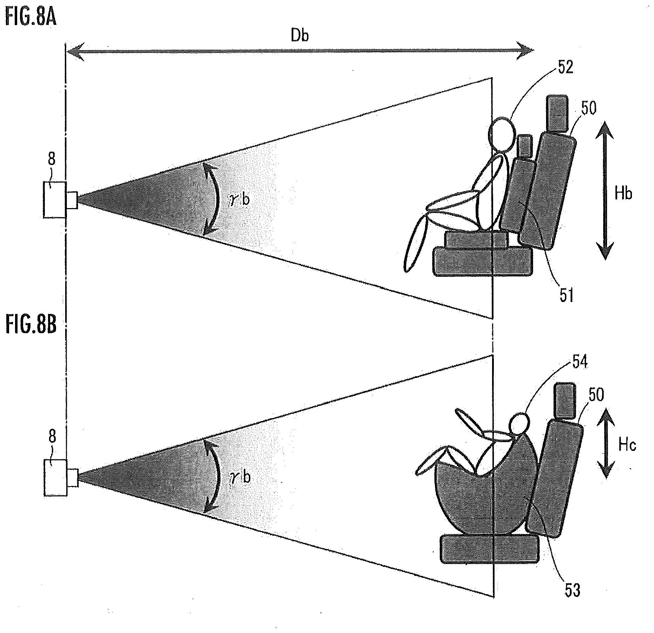

FIG. 8A and FIG. 8B are explanatory diagrams illustrating a case where the size of an object to be measured cannot be determined based on a distance alone. FIG. 8A illustrates a junior car seat 51 attached to a front passenger seat 50, and a child 52 sitting on the junior car seat 51. FIG. 8B illustrates a child car seat 53 attached to the front passenger seat 50, and a baby 54 sitting on the child car seat 53.

According to the measurement of the distance to an object to be measured by the distance calculation unit 31, the distances to the child 52 and the baby 54 are both Db. Further, the number of vertically successive pixels of the object to be measured that is grasped from the pixel data of the optical camera 8 will be equivalent to the vertical dimension of the front passenger seat 50 and therefore will undesirably be $\gamma$b for both the child 52 and the baby 54. Hence, despite the fact that the child 52 and the baby 54 have different vertical dimensions Hb and Hc, respectively, (Hb > Hc), the child 52 and the baby 54 cannot be distinguished from the measurement of the distances and the detection of the view angles alone.

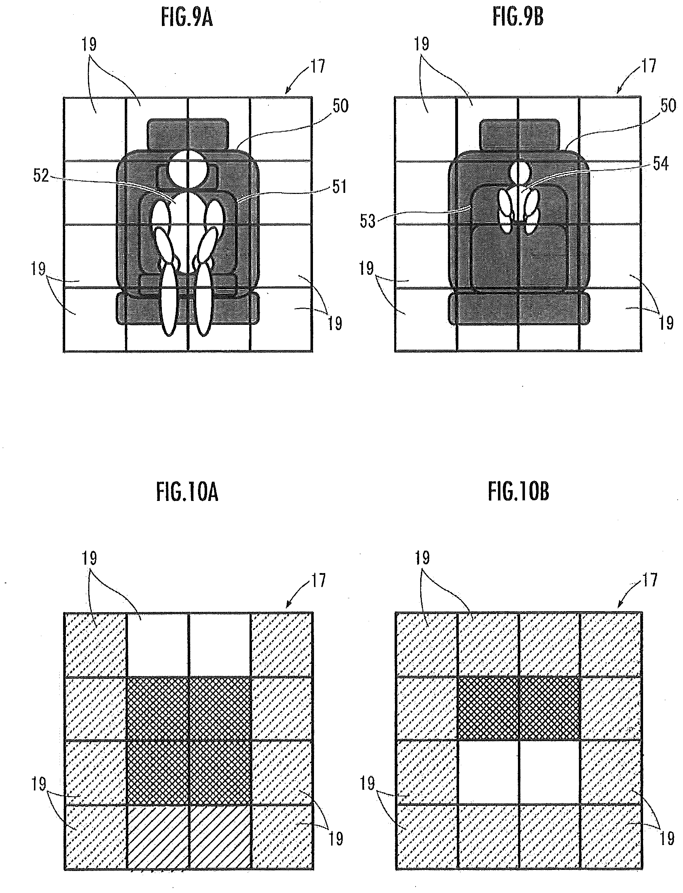

The interior information acquisition device 4 overcomes the foregoing problem by using the infrared camera 9. FIG. 9A and FIG. 9B illustrate the image pickup sections 19 set for the image pickup range 17 in FIG. 4 described above and illustrates which image pickup sections 19 of the image pickup range 17 are occupied by the child 52 and the baby 54, which are the objects to be measured. The image pickup range 17 in FIG. 9A, FIG.

9B, FIG. 10A and FIG. 10B, which will be discussed hereinafter, is set for the image pickup range of only the front passenger seat for the convenience of explanation.

According to the naming of elements in a matrix, the (rows and columns) of the image pickup sections 19 of the image pickup range 17 will be defined. The image pickup section 19 at the top left corner of the image pickup range 17 is defined as (1, 1), the column number of each column is incremented by one in the right direction, the line number of each line is incremented by one downward, and the image pickup section 19 at the bottom right corner is defined as (4, 4).

In FIG. 9A, the image pickup sections 19 which are mainly occupied by a portion of the child 52 are four (2,2), (2, 3), (3, 2) and (3, 3) . Meanwhile, in FIG. 9B, there are two image pickup sections 19 (2, 2) and (2, 3) which are mainly occupied by the baby 54.

FIG. 10A and FIG. 10B illustrate the temperature of each of the image pickup sections 19 in which the temperature detection unit for each image pickup section 32 detects temperature in the image pickup range 17. In this example, the temperatures are indicated in four scales. Each temperature scale corresponds to each segment obtained by dividing the entire temperature range to be detected in the vehicle interior into a plurality of segments. The temperature range extends from high of temperature scale 1 downward to low of temperature scale 4. The image pickup sections 19 of temperature scale 1 are denoted by diagonal lines sloping upward toward the right and diagonal lines sloping downward toward the right overlapping each other, the image pickup sections 19 of temperature scale 2 are denoted by solid diagonal lines sloping upward toward the right, the image pickup sections 19 of temperature scale 3 are denoted by wavy lines sloping upward toward the right, and the image pickup sections 19 of temperature scale 4 are blank.

Temperature scale 1 is set to a temperature scale of a temperature range that includes the body temperature of a human being. Thus, it can be determined that a human body is present in the image pickup section 19 of temperature scale 1. The infrared ray 42 is radiated from a heat source and becomes weaker as the distance from the heat source increases. Hence, if the temperature of an object to be measured is determined from an absolute incident amount in the infrared camera 9, then the temperature is erroneously determined to be lower as the distance of the object to be measured from the infrared camera 9 increases. Therefore, the temperature detection unit for each image pickup section 32 corrects the temperature of each of the image pickup sections 19 based on a corrected value obtained by correcting the absolute incident amount in the infrared camera 9 for each of the image pickup sections 19 based on the distance to the object to be measured detected by the distance calculation unit 31, thereby preventing the same temperature from being detected as different temperatures due to the different distances of the object to be measured.

FIG. 10A and FIG. 10B illustrate the temperatures of the image pickup sections 19 relative to the objects to be measured in FIG. 9A and FIG. 9B, respectively. In FIG. 10A, the temperatures of four image pickup sections 19 of (2, 2), (2, 3), (3, 2) and (3, 3) are temperature scale 1. In FIG. 10B, the temperatures of only two image pickup sections 19 of (2, 2) and (2, 3) are temperature scale 1. Further, in FIG. 10B, the temperatures of the image pickup sections 19 of (3, 2) and (3,3) beneath (2, 2) and (2, 3) are temperature scale 4.

The child 52 and the baby 54 can be distinguished by detecting the temperature scales of the image pickup sections 19 illustrated in FIG. 10A and FIG. 10B. There are two methods for discriminating the child 52 and the baby 54 by detecting the temperature scales of the image pickup sections 19; one method in which the quantity of the image pickup sections 19 of temperature scale 1 is counted and the other method in which the plurality of image pickup sections 19 is checked for a temperature scale pattern.

According to the method in which the quantity of the image pickup sections 19 of temperature scale 1 is counted, a predetermined threshold value is set (the threshold in the example of FIG. 10A and FIG. 10B = 3), and if the quantity of the image pickup sections 19 of temperature scale 1 is below the threshold value, then it is determined that the object to be measured is the baby 54, and if the quantity is the threshold value or more, then it is determined that the object to be measured is the child 52.

When counting the quantity of the image pickup sections 19 of temperature scale 1, the image pickup section 19 of temperature scale 1 that has no adjacent image pickup section 19 of temperature scale 1 in any one of the vertical, horizontal and oblique directions (an isolated image pickup section 19) is to be excluded from the counting. For example, in FIG. 10B, if the image pickup section 19 of (4, 4) has temperature scale 1, while the image pickup sections 19 of (3, 3), (3, 4) and (4, 3) do not have temperature scale 1, then the image pickup section 19 of (4, 4) will not be counted as the image pickup section 19 having temperature scale 1.

According to the method in which the plurality of the image pickup sections 19 is checked for a temperature scale pattern, there is a temperature scale pattern in the case of the baby 54, in which both two in the top row have temperature scale 1, while both two in the bottom row have temperature scale 4 in the area of 2 x 2 of the image pickup sections 19, but there is no such temperature scale pattern in the case of the child 52. Thus, the child 52 and the baby 54 are discriminated by checking for the presence of the foregoing temperature scale pattern in the image pickup range 17.

The discrimination between the child 52 and the baby 54 and the front seat passenger 3 in FIG. 7B can be accomplished based on the distances to the objects to be measured. More specifically, the distance to the child 52 and the distance to the baby 54 are shorter than the distance to the front seat passenger 3 by the thickness of the backrest of the junior car seat 51 and the thickness of the backrest of the child car seat 53.

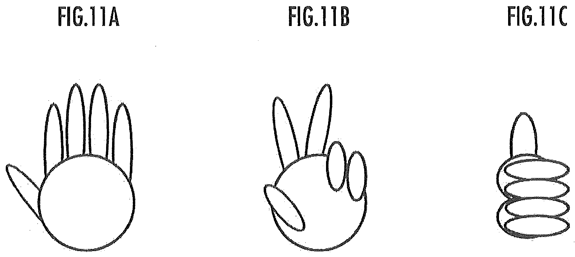

FIG. 11A to FIG. 11C illustrate various finger gestures. The driver 2 can hold his/her hand in front of the interior information acquisition device 4 and gesticulate as illustrated in FIG. 11A to FIG. 11C by using his/her fingers in order to give instructions to an air conditioner and an audio device.

FIG. 11A illustrates a gesture of "paper" of a paper-scissors-rock game, FIG. 11B illustrates a gesture of "scissors" of the paper-scissors-rock game, and FIG. 11C illustrates a gesture of a thumb up.

The interior information acquisition device 4 detects the distance to an object to be measured, and if the distance is below 50 cm and the quantity of the image pickup sections 19 of temperature scale 1 (after a distance correction) is the predetermined threshold value or more, then the interior information acquisition device 4 carries out pattern matching on a predetermined image portion of a pickup image of the optical camera 8 so as to identify which one of the gestures of FIG. 11A to FIG. 11C applies to a finger gesture given by the driver 2.

The interior information acquisition device 4 is capable of identifying finger gestures or the movements of the fingers in addition to those of FIG. 11A to FIG. 11C based on detected distances and detected temperatures of an object to be measured. Detecting not only gestures but also gestures that involve the movements of fingers is useful to prevent false detections by discriminating whether a gesture is an intended instruction from the driver 2 or fingers have accidentally formed a specified gesture. As a gesture movement, if the fingers are moved in a particular direction while maintaining one of the gestures of, for example, FIG. 11A to FIG. 11C, then it can be determined that it is an intended instruction from the driver 2.

It is also possible to assign a single instruction to a combination of gestures. As an example of the combination, a single instruction is assigned to a combination in which the scissors of FIG. 11B are changed to the paper of FIG. 11A.

In the foregoing description, the interior information acquisition device 4 corresponds to the information acquisition device for an object to be measured in the present invention. The optical camera 8 is an example of the imaging device in the present invention. The infrared camera 9, the infrared sensors 25 and the temperature detection unit for each image pickup section 32 are examples of the temperature detecting device in the present invention. The infrared camera 9 and the infrared sensors 25 are examples of the imaging type temperature sensor and the incident amount detection type temperature sensors, respectively, in the present invention. The LEDs 13 are examples of the modulated light emitting unit in the present invention. The information acquisition unit 33 is an example of the information acquisition device for an object to be measured in the present invention. The infrared ray 42 is an example of the medium emitted for temperature observation in the present invention.

FIG. 12 is a flowchart of the control carried out in the automobile 1 equipped with the interior information acquisition device 4. The control is carried out according to a predetermined program executed by the controller 30. The functions of the distance calculation unit 31 to the device control unit 35 are implemented by the controller 30 executing a program read from a memory (not illustrated), such as a ROM.

It is assumed that the control program related to FIG. 12 is executed by time interrupt at predetermined time intervals while driving, because the processing in STEP8 and STEP9 involves the instructions in the form of finger gestures given by the driver 2 as necessary while driving the automobile 1. STEP15 and STEP16 may be carried out only when a door switch or the like detects a change in the number of occupants or occupants changing their seats in a case, for example, where occupants get in or out at a start of driving the automobile 1 or on the way to a destination.

In STEP1, the distance calculation unit 31 acquires the data of a pickup image from the optical camera 8 (the pickup image will be hereinafter referred to as "the optical pickup image"). The optical pickup image data is the data created by the optical camera 8 picking up the image of the vehicle interior from the dashboard 5.

In STEP2, the temperature detection unit for each image pickup section 32 acquires the data of a pickup image from the infrared camera 9 (the pickup image will be hereinafter referred to as "the infrared pickup image"). The infrared pickup image data is the data created by the infrared camera 9 picking up the image of the vehicle interior from the dashboard 5. The temperature detection unit for each image pickup section 32 uses the infrared pickup image to grasp the temperature scale of each of the image pickup sections 19 in the image pickup range 17 (e.g. FIG. 10A and FIG. 10B).

In the automobile 1 provided with the interior information acquisition device 24 instead of the interior information acquisition device 4, the temperature detection unit for each image pickup section 32 acquires, in place of the infrared pickup image, the data of the incident amount of the infrared ray 42 on each of the infrared ray detection ranges 18 from each of the infrared sensors 25 (FIG. 3) and determines the temperature of each of the image pickup sections 19 corresponding to each of the infrared ray detection ranges 18 based on the acquired data, thereby grasping the temperature scale of each of the image pickup sections 19 in the image pickup range 17 (e.g. FIG. 10A and FIG. 10B).

In STEP3, the distance calculation unit 31 calculates the distance to the object to be measured. The distance calculation unit 31 uses the TOF described in relation to FIG. 6 as the method for calculating the distances. According to the TOF, the LED 13 emits modulated light toward the object to be measured, and the optical camera 8 detects the light derived from the modulated light that hits the object to be measured and returns as reflected light. Hence, even if the vehicle interior is dark, the distance calculation unit 31 is capable of successfully calculating the distance to the object to be measured.

In STEP4, the temperature detection unit for each image pickup section 32 corrects the infrared pickup image data based on the distance to the object to be measured that has been calculated by the distance calculation unit 31 and corrects the temperature of each of the image pickup sections 19 in the image pickup range 17. Specifically, the temperature of each of the image pickup sections 19 after having been corrected by the temperature detection unit for each image pickup section 32 is indicated by means of scales, as illustrated in FIG. 10A and FIG. 10B, rather than a temperature. The reason for correcting the temperature based on the distance to the object to be measured is that the infrared ray 42 incident upon the infrared camera 9 weakens as the distance to the object to be measured increases.

In STEP5, the temperature detection unit for each image pickup section 32 determines whether the image pickup sections 19 of the image pickup range 17 include the image pickup sections 19 of a human body temperature scale as a temperature scale that includes the human body temperature range, and proceeds to STEP6 if the image pickup sections 19 of the human body temperature scale are included, or terminates the processing if the image pickup sections 19 of the human body temperature scale are not included. More specifically, the image pickup sections 19 of the human body temperature scale refer to those of temperature scale 1 described above, and are the four image pickup sections 19 of (2, 2), (2, 3), (3, 2) and (3, 3) in FIG. 10A.

In STEP6, the information acquisition unit 33 determines whether the distance to the object to be measured is below a threshold value, and proceeds to STEP7 if the distance is determined to be below the threshold value, or proceeds to STEP 15 if the distance is determined to be the threshold value or more. The threshold value is, for example, 50 cm, and set so as to determine whether to carry out either the processing for identifying the finger gestures in STEP7 to STEP9 or the processing for detecting the number of the occupants or the like in the vehicle interior in STEP15 and STEP16. It is assumed in the present embodiment that the finger gestures are given at a distance below 50 cm from the interior information acquisition device 4.

In STEP7, the information acquisition unit 33 reads the data on an image portion of the object to be measured from an optical pickup image. In the optical camera 8, the data on an image portion of any region of an optical pickup image can be read.

In STEP8, the information acquisition unit 33 carries out the pattern matching processing on the image portion data read in STEP7 to identify a gesture (e.g.

FIG. 11A to FIG. 11C). In the pattern matching processing, the image portion data rather than the entire pickup image data is compared with pattern image data set for each gesture, thus achieving reduced load and shorter processing time for the pattern matching processing.

In STEP9, the information acquisition unit 33 carries out the device control associated with the instruction based on the gesture identified in STEP7. Specific examples of the device control include the adjustment of the set temperature of an air conditioner, turning on/off of an audio device or turning up/down the volume thereof, and playing/stopping of music in the audio device.

In STEP15, the information acquisition unit 33 acquires information on the number of occupants and their positions (the seats in which the occupants are sitting) in the vehicle interior and the sizes of the occupants (e.g. the child 52 or the baby 54 illustrated in FIG. 9A and FIG. 9B). According to a specific method for acquiring the information in STEP15, the temperature scale for each of the image pickup sections 19 when no person is sitting in seats is stored in advance, and the temperature scale for each of the image pickup sections 19 when nobody is present is compared with the temperature scale of each of the image pickup sections 19 that has been detected currently thereby to check the quantity of the image pickup sections 19 having a different temperature scale. The presence of persons in the seats and the sizes of the persons are determined according to whether the quantity indicates a difference of a threshold value or more.

In STEP16, the device control unit 35 carries out the control of onboard devices according to the number of occupants, the positions and the sizes of the occupants. Specific examples of the control of the onboard devices included in STEP16 are blowing air from a discharge port for each seat in which an occupant is present, stop blowing air from the discharge port for a vacant seat, adjusting the air volume according to the size of an occupant, and halting the actuation of an air bag for a vacant seat in case of a collision.

The device control unit 35 is capable of detecting, for example, the positions of the heads of the driver 2 and the front seat passenger 3 by using the information on the temperature scale of each of the image pickup sections 19 of the image pickup range 17. Regarding the height of a head, the head is located in the uppermost image pickup sections 19 among the image pickup sections 19 of the temperature scale corresponding to the human body temperature in the image pickup range 17, and the height of each of the image pickup sections 19 in the vehicle interior is known beforehand. This enables the device control unit 35 to carry out, for example, the adjustment of the heights of headrests or the adjustment of the angle of a rearview mirror or the angles of side mirrors to match the height of the uppermost image pickup sections 19 among the image pickup sections 19 of the scale corresponding to the human body temperature, independently of the processing in STEP16.

Further, the device control unit 35 is capable of alarming the driver 2 by a buzzer or the like if the head position repeatedly and frequently changes in the vertical or horizontal direction, which indicates the possibility of drowsy driving.

In STEP17, the device control unit 35 determines the size of the object to be measured, namely, a person based on the quantity of the image pickup sections 19 of the human body temperature scale or the layout pattern of the temperature scales in the image pickup range 17. If the size is large, then the device control unit 35 determines that the object to be measured is an adult and terminates the processing. If the size of the object to be measured is small, then the device control unit 35 determines that the object to be measured is an infant and proceeds to STEP18. More specifically, the magnitude of the size is determined according as whether the quantity of the image pickup sections 19 of the human body temperature scale is not less than or less than a predetermined value.

In STEP18, the device control unit 35 determines whether an engine is at rest, and proceeds to STEP19 if the engine is at rest, or terminates the processing if the engine is in operation.

In STEP19, the device control unit 35 determines that a child is still in the vehicle interior (left in the automobile) and issues an alarm.

The following will describe application examples in which the information on the temperature scale of each of the image pickup sections 19 of the image pickup range 17 is applied to fields other than the automobile 1.

[Security field]

A possible problem with an application to a security field is false detection of a small animal (e.g. a cat or rat) with a resultant alarm. The use of the system is capable of distinguishing human beings from small animals or the like based on the distance, size, and temperature of an object, thus preventing false detection.

[Digital signage]

As the control methods for operating a digital signage, there are a touch panel type and a gesture type. If a display with a large screen uses the touch panel type, then an operator may not be able to reach an upper part of the screen to perform control by touching the upper part. As a solution to such a problem, it would be convenient if the operator could operate the display from a distance by giving gestures. However, if it is installed at a location where many and unspecified persons gather, then a target person cannot be identified. In such a case, the person or his/her hands closest to the digital signage are recognized based on the distance and the temperature, thus permitting smooth operations even when a plurality of persons is present.

[Home electric appliances]

Electric appliances, such as air conditioners, air cleaners and television sets, which are adapted to determine the presence of persons and carry out control, are being sold. Currently, the control is based only on temperature or temperature changes. If, however, information of distance is used to enable the appliances to acquire the information on the space of a room and also acquire the information on temperature in the room, then the appliances will be able to perform a higher level of control. For example, if the size and the temperature of an object to be measured are found, and then it can be determined that an object to be measured is not a human being if the size is obviously not that of a human being even if the temperature is close to that of a human being.

[Outside a vehicle interior]

The driver 2 himself/herself checks the pictures on a camera to monitor the rear of the vehicle. An ultrasonic sensor is mounted in the automobile 1 in some cases, but the distance accuracy or the like thereof is not high. If the system is used, the size and the temperature of an object are detected, so that if an object is judged likely to be a human being, then a loud alarm can be sounded or the brake is forcibly applied, permitting improved safety.

The present invention has been described above in relation to the embodiments of the invention. The present invention, however, is not limited to the embodiments of the invention described herein and may be implemented in various other applications within the scope of the appended claims.

For example, there is only one interior information acquisition device 4 on the dashboard 5 for the front seats. Alternatively, however, another interior information acquisition device 4 may be deployed on the back surface of the backrest of the driver's seat to detect the number of occupants and the positions thereof in the back seats. Further alternatively, the single interior information acquisition device 4 may be deployed, facing downward, at the central part of the ceiling so as to detect the number of occupants and the positions thereof in the entire vehicle interior by the single interior information acquisition device 4, or one interior information acquisition device 4 may be deployed, facing downward, on the ceiling on the front seat side and another interior information acquisition device 4 may be deployed, facing downward, on the ceiling on the rear seat side so as to separately detect the number of occupants and the positions thereof only on the front seats and only on the back seats, respectively. Further, the interior information acquisition device 4 may be deployed, facing downward, one each on the part of the ceiling immediately above each seat so as to allow the presence of an occupant in each seat to be detected.

For example, in the embodiments of the present invention, the optical camera 8 and the infrared camera 9 are housed in the same case 10 (FIG. 2) and are both deployed on the dashboard 5. Alternatively, however, the optical camera 8 may be deployed on the dashboard 5 and the infrared camera 9 may be deployed on the ceiling. In this case, although the optical camera 8 faces toward the rear, while the infrared camera 9 faces downward, both of these cameras are directed toward the seats to pick up images of the seats.

**Claims**

1. An information acquisition device (4) for an object to be measured, comprising:

    an imaging device (8) which generates a pickup image (17) of a predetermined image pickup range (6), wherein the imaging device (8) is an optical camera having an optical axis, said optical camera generating said pickup image from light, wherein said pickup image (17) is in a direction at right angles relative to the direction of the optical axis of the optical camera, and wherein said pickup image (17) is divided into image pickup sections (19) that form a matrix, and each of the image pickup sections (19) corresponds to an image section of the pickup image;
    a modulated light emitting unit (13) configured to emit modulated light (40) toward the image pickup range (6) wherein received light incident on the optical camera is a combination of incident reflected light of the modulated light (40) that is reflected off the object to be measured in the image pickup range (6) and incident reflected light derived from background light;
    a distance calculation unit (31) configured to calculate a required time for the modulated light (40) to reach an object to be measured in the image pickup range (6) and to return as reflected light (41) based on the pickup image so as to calculate a distance to the object to be measured in the image pickup range (6) of the optical camera based on the required time;
    a temperature detection device (32) configured to detect a temperature of each image pickup section (19) and to correct said temperature of each image pickup section (19) based on a corrected value obtained by correcting an absolute incident amount of infrared radiation (42) for each image pickup section (19) based on the distance to the object to be measured detected by the distance calculation unit (31), thereby preventing the same temperature from being detected as different temperatures due to the different distances of the object to be measured; and
    an information acquisition unit (33) configured to acquire information on the object to be measured based on the distance to the object to be measured calculated by the distance calculation unit (31) and the temperature of each image pickup section (19) detected by the temperature detection device (32).

2. The information acquisition device for an object to be measured according to claim 1,
   wherein the temperature detection device (32) comprises an imaging type temperature sensor (9) which stores an intensity of the infrared radiation (42) emitted for temperature observation from each portion of the pickup image (17) as each pixel data and which allows pixel data belonging to each image pickup section (19) to be read, or a plurality of incident amount detection type temperature sensors (25), each of which detects the incident amount of the infrared radiation (42) emitted for temperature observation from a corresponding image pickup section (19).

3. The information acquisition device for an object to be measured according to claim 2,
   wherein the information acquisition unit (33) is configured to extract an image portion corresponding to an image pickup section (19) in which the object to be measured exists from the pickup image based on the detection of the temperature detection device (32) and carries out pattern matching processing on the image portion, thereby acquiring information on the object to be measured.

**Patentansprüche**

1. Eine Informationserfassungseinrichtung (4) für ein Objekt, das gemessen werden soll, die Folgendes aufweist:

    eine Abbildungs- bzw. Bildaufnahmeeinrichtung (8), die ein Aufnahmebild (17) eines vorbestimmten Bildaufnahmebereichs (6) generiert, wobei die Abbildungseinrichtung (8) eine optische Kamera ist, die eine optische Achse hat, wobei die optische Kamera das Aufnahmebild aus Licht generiert, wobei das Aufnahmebild (17) in einer Richtung in rechten Winkeln relativ zu der Richtung der optischen Achse der optischen Kamera ist, und wobei das Aufnahmebild in Bildaufnahmeabschnitte (19) unterteilt ist, die eine Matrix bilden, und wobei jeder der Bildaufnahmeabschnitte (19) einem Bildabschnitt des Aufnahmebildes entspricht;
    eine Emissionseinheit (13) für moduliertes Licht, die konfiguriert ist zum Emittieren von moduliertem Licht (40) in Richtung des Bildaufnahmebereichs (6), wobei das aufgenommene Licht, das in die optische Kamera einfällt, eine Kombination von einfallendem reflektierten Licht des modulierten Lichtes (40) ist, das von dem Objekt reflektiert wird, das in dem Bildaufnahmebereich (6) gemessen werden soll, und von einfallendem reflektiertem Licht, das von der Hintergrundbeleuchtung stammt;

eine Entfernungsberechnungseinheit (31), die konfiguriert ist zum Berechnen einer erforderlichen Zeit für das modulierte Licht (40) zum Erreichen eines Objektes, das gemessen werden soll, in dem Bildaufnahmebereich (6) und zum Zurückkehren als reflektiertes Licht (41) basierend auf dem Aufnahmebild, um so eine Distanz zu dem Objekt zu berechnen, das in dem Bildaufnahmebereich (6) der optischen Kamera gemessen werden soll, und zwar basierend auf der erforderlichen Zeit;

eine Temperaturdetektionseinrichtung (32), die konfiguriert ist zum Detektieren einer Temperatur jedes Bildaufnahmeabschnittes (19) und zum Korrigieren der Temperatur jedes Bildaufnahmeabschnittes (19) basierend auf einem korrigierten Wert, der erhalten wird durch Korrigieren einer absoluten einfallenden Menge an Infrarotstrahlung (42) für jeden Bildaufnahmeabschnitt (19) basierend auf der Distanz zu dem Objekt, das gemessen werden soll, die durch die Distanzberechnungseinheit (31) detektiert wird, wodurch verhindert wird, dass die gleiche Temperatur als unterschiedliche Temperaturen detektiert wird aufgrund unterschiedlicher Distanzen des Objektes, das gemessen werden soll; und

eine Informationserfassungseinheit (33), die konfiguriert ist zum Erfassen von Information hinsichtlich des Objekts, das gemessen werden soll, basierend auf der Distanz zu dem Objekt, das gemessen werden soll, die durch die Distanzberechnungseinheit (31) berechnet wird und der Temperatur jedes Bildaufnahmeabschnittes (19), die durch die Temperaturdetektionseinrichtung (32) detektiert wird.

2. Informationserfassungseinrichtung für ein Objekt, das gemessen werden soll, gemäß Anspruch 1, wobei die Temperaturdetektionseinrichtung (32) einen Temperatursensor (9) vom Bildaufnahmetyp, der eine Intensität der emittierten Infrarotstrahlung (42) zur Temperaturbeobachtung von jedem Teil des Aufnahmebildes (17) als jeweilige Pixeldaten speichert und der gestattet, dass die Pixeldaten, die zu jedem Abbildungsaufnahmeabschnitt (19) gehören, gelesen werden, oder eine Vielzahl von Temperatursensoren (25) vom Einfallsmengendetektionstyp aufweist, in denen jeder die Einfallsmenge der emittierten Infrarotstrahlung (42) detektiert, und zwar zur Temperaturbeobachtung von einem entsprechenden Aufnahmebildabschnitt (19).

3. Informationserfassungseinrichtung für ein Objekt, das gemessen werden soll, gemäß Anspruch 2, wobei die Informationserfassungseinheit (33) konfiguriert ist zum Extrahieren eines Bildteiles entsprechend einem Bildaufnahmeabschnitt (19), in dem das Objekt, das gemessen werden soll, vorliegt aus dem Aufnahmebild basierend auf der Detektion der Temperaturdetektionseinrichtung (32) und die Musterabgleichsverarbeitung auf dem Bildteil ausführt, wodurch Information hinsichtlich des Objekts, das gemessen werden soll, erfasst wird.

## Revendications

1. Dispositif d'acquisition d'informations (4) pour un objet à mesurer, comprenant :

   un dispositif de capture d'image (8) qui produit une image prélevée (17) d'une plage de prélèvement d'image prédéterminée (6), le dispositif de capture d'image (8) étant une caméra optique ayant un axe optique, la caméra optique produisant une image prélevée à partir de lumière, l'image prélevée (17) étant dans une direction à angle droit par rapport à la direction de l'axe optique de la caméra optique, et l'image prélevée (17) étant divisée en sections de prélèvement d'image (19) qui forment une matrice, et chacune des sections de prélèvement d'image (19) correspondant à une section d'image de l'image prélevée ;

   un module d'émission de lumière modulée (13) agencé pour émettre de la lumière modulée (40) en direction de la plage de prélèvement d'image (6), la lumière incidente reçue sur la caméra optique étant une combinaison de lumière incidente réfléchie provenant de la lumière modulée (40) qui est réfléchie par l'objet à mesurer dans la plage de prélèvement d'image (6), et de lumière incidente réfléchie obtenue à partir de la lumière d'arrière-plan ;

   un module de calcul de distance (31) agencé pour calculer le temps nécessaire pour que la lumière modulée (40) atteigne un objet à mesurer dans la plage de prélèvement d'image (6) et revienne comme lumière réfléchie (41) sur la base de l'image prélevée de manière à calculer une distance de l'objet à mesurer dans la plage de prélèvement d'image (6) de la caméra optique sur la base du temps nécessaire ;

   un dispositif de détection de température (32) agencé pour détecter une température de chaque section de prélèvement d'image (19) et pour corriger la température de chaque section de prélèvement d'image (19) sur la base d'une valeur corrigée obtenue en corrigeant une quantité incidente absolue de rayonnement infrarouge (42) pour chaque section de prélèvement d'image (19) sur la base de la distance par rapport à l'objet à mesurer détectée par le module de calcul de distance (31), empêchant ainsi que la même température soit détectée comme des températures différentes en raison des distances différentes par rapport à l'objet à mesurer ; et un module d'acquisition d'informations (33) agencé pour acquérir des informations sur l'objet à mesurer sur la base de la distance par rapport à l'objet à mesurer calculée par le module de calcul de distance (31) et de la température de chaque section de prélèvement d'image (19) détectée par le dispositif de détection de température (32).

2.  Dispositif d'acquisition d'informations pour un objet à mesurer selon la revendication 1, dans lequel le dispositif de détection de température (32) comprend un capteur de température du type à capture d'image (9) qui mémorise une intensité du rayonnement infrarouge (42) émis pour l'observation de la température provenant de chaque portion de l'image prélevée (17) en tant que données de pixel élémentaire, et qui permet de lire des données de pixels appartenant à chaque section de prélèvement d'image (19), ou une pluralité de capteurs de température du type à détection de quantité incidente (25), dont chacun détecte la quantité incidente de rayonnement infrarouge (42) émis pour l'observation de température à partir d'une section de prélèvement d'image (19) correspondante.

3.  Dispositif d'acquisition d'informations pour un objet à mesurer selon la revendication 2, dans lequel le module d'acquisition d'informations (33) est agencé pour extraire une portion d'image correspondant à une section de prélèvement d'image (19) dans laquelle l'objet à mesurer se trouve à partir de l'image prélevée sur la base de la détection du dispositif de détection de température (32) et réalise un traitement de concordance de motif sur la portion d'image, faisant ainsi l'acquisition d'informations sur l'objet à mesurer.

FIG.1

# FIG.2

FIG.3

# FIG.4

FIG.5

# FIG.6

EMISSION
INTENSITY OF
MODULATED LIGHT

← →| TIME-OF-FLIGHT OF LIGHT

REFLECTED LIGHT DERIVED
FROM MODULATED LIGHT

LIGHT RECEIVING
INTENSITY OF
OPTICAL CAMERA

REFLECTED LIGHT DERIVED
FROM BACKGROUND LIGHT

TIME

## FIG.7A

## FIG.7B

**FIG.8A**

**FIG.8B**

FIG.9A

FIG.9B

FIG.10A

FIG.10B

FIG.11A

FIG.11B

FIG.11C

## FIG.12

START

STEP1
ACQUIRE OPTICAL PICKUP IMAGE DATA

STEP2
ACQUIRE INFRARED PICKUP IMAGE DATA

STEP3
CALCULATE DISTANCE TO OBJECT TO BE MEASURED

STEP4
CORRECT TEMPERATURE OF IMAGE PICKUP SECTION ON THE BASIS OF MEASURED DISTANCE

STEP5
ARE IMAGE PICKUP SECTIONS OF HUMAN BODY TEMPERATURE SCALE INCLUDED? — NO

YES

STEP6
IS DISTANCE TO OBJECT TO BE MEASURED BELOW THRESHOLD VALUE? — NO

YES

STEP7
READ DATA IMAGE PART OF OBJECT TO BE MEASURED FROM OPTICAL PICKUP IMAGE DATA

STEP8
IDENTIFY GESTURE BY PATTERN MATCHING

STEP9
CONTROL DEVICE BASED ON GESTURE

END

END

STEP15
ACQUIRE INFORMATION OF NUMBER, POSITIONS, AND SIZES OF THE OCCUPANTS

STEP16
CONTROL DEVICE BASED ON NUMBER, POSITIONS, AND SIZES OF THE OCCUPANTS

STEP17
SIZE OF OCCUPANTS? — LARGE

SMALL

STEP18
IS ENGINE AT REST? — NO

YES

STEP19
ALARM (EXAMPLE: CHILD LEFT IN THE CAR)

**EP 2 833 160 B1**

**Patent documents cited in the description**

- JP 2008089346 A
- JP 2010184600 A
- WO 2005026774 A1
- US 2006049930 A1
- US 2010117839 A1